(19) Europäisches Patentamt
European Patent Office
Office européen des brevets

(11) Publication number: 0 014 801 A1

(12) EUROPEAN PATENT APPLICATION

(21) Application number: 79302825.9

(22) Date of filing: 07.12.79

(51) Int. Cl.³: C 07 C 143/28
C 07 C 139/00, C 10 M 1/40

(30) Priority: 13.12.78 GB 4832178

(43) Date of publication of application: 03.09.80 Bulletin 80/18

(84) Designated Contracting States: BE DE FR GB IT NL

(71) Applicant: Exxon Research and Engineering Company
P.O.Box 390 200 Park Avenue
Florham Park New Jersey 07932(US)

(72) Inventor: Marsh, John Frederick
1 Valley Close
Goring on Thames, Oxfordshire(GB)

(72) Inventor: Cleverley, John Arthur
Simla 39 Warner Crescent
Didcot, Oxfordshire(GB)

(74) Representative: Bawden, Peter Charles
Esso Research Centre P.O. Box 1
Abingdon Oxfordshire OX13 6BB(GB)

(54) **A process for the production of basic magnesium sulphonates and the products obtained by this process.**

(57) A process for the production of basic magnesium sulphonates comprising carbonating a mixture containing:
(a) an oil soluble sulphonic acid or sulphonate
(b) a stoicheiometric excess of magnesium compound above that required to react with (a)
(c) a hydrocarbon solvent
(d) a $C_8$ to $C_{10}$ carboxylic acid
(e) water

EP 0 014 801 A1

Croydon Printing Company Ltd.

TITLE MODIFIED

The present invention relates to the production of basic magnesium sulphonates. The basic magnesium sulphonates produced by the present invention are particularly useful as additives for lubricating oils and the present invention also provides lubricating oils containing these basic magnesium sulphonates. The term basic sulphonate is used to describe materials containing a stoicheiometric excess of magnesium compared to that required to neutralize the sulphonic acid.

Basic magnesium sulphonates are well known as is their use as additives for lubricants and many methods have been proposed for their production the preferred techniques being the carbonation of an oil solution of a reaction mixture containing a sulphonic acid or sulphonate, an excess of a compound of magnesium generally the alkoxide, oxide or hydroxide, usually a hydrocarbon solvent in the presence of reaction promoter systems often comprising an alcohol and/or water sometimes together with a copromoter.

It is important that where the highly basic sulphonates are to be used as additives for lubricating oils they be not too viscous, are free of sediment, are soluble in the oil and do not cause the lubricating oil to be hazy. It is also preferred that they have as high a Total Base Number (TBN), being the number of milligrams of KOH equivalent to 1 gram of the product when titrated with strong acid, as possible since this results in the most economic use of the metal. It is also important that the compound perform well as an additive in an oil in use in an engine. From an economic point of view it is of added importance that the product once made may be filtered as rapidly as possible.

It is well known that the production of basic magnesium sulphonates presents greater difficulties than producing Barium and Calcium sulphonates and many of the first techniques proposed for producing magnesium sulphonates required magnesium metal as starting material, as for example in United States Patent 3158009. Since then various reaction promoter systems have been proposed for the production of basic magnesium sulphonates from magnesium oxide. For example, U.K. Patent 1166744 is concerned with the use of mixtures of alcohol, water and amines as promoters; U.K. Patent 1297150 describes the use of certain oil soluble carboxylic fatty acids and water whilst U.K.

Patent 1399092 relates to the use of amine salts of carboxylic acids, alcohol and water.

We have now discovered a new promoter system which is effective either as sole promoter or together with other promoters in the production of a highly basic magnesium sulphonates from magnesium oxide. In particular we have discovered that by using certain selected carboxylic acids as promoters a product with improved filtration for a given basicity may be obtained.

The present invention therefore provides a process for the production of basic magnesium sulphonates comprising carbonating a mixture containing:

(a) an oil soluble sulphonic acid or sulphonate.

(b) a stoicheiometric excess of a magnesium compound above that required to react with (a).

(c) a hydrocarbon solvent.

(d) a $C_8$ to $C_{10}$ carboxylic acid.

(e) water.

After carbonation the reaction mixture is generally stripped to remove the volatiles and filtered to obtain an oil solution of the basic magnesium sulphonate as filtrate.

The sulphonate or sulphonic acid used in the process of this invention may be natural or synthetic, the synthetic alkylaryl sulphonates and sulphonic acids being preferred. The magnesium compound may be magnesium oxide, magnesium hydroxide or a magnesium alkoxide. For economic reasons magnesium oxide is preferred.

The basic magnesium sulphonates with which this invention is concerned consist of an oil solution of magnesium sulphonate which itself acts as a surfactant to disperse the excess magnesium which is present as colloidal magnesium derivatives such as carbonate, oxide and hydroxide. Thus it is important that the sulphonate or sulphonic acid be oil soluble.

The excess of magnesium provides the basicity of the compound and the amount of magnesium that should be used depends upon its quality and the desired TBN of the product. The excess may be achieved by

starting with the sulphonic acid and adding an amount necessary to give the required excess after reaction with the acid or by starting with magnesium sulphonate and then adding the required excess. We prefer to use from 1 to 45 more preferably 1 to 25 equivalents of magnesium for each equivalent of sulphonic acid present in the reaction mixture, this would include magnesium present if a sulphonate is used as the starting material in which case the equivalents of sulphonic acid from which the sulphonate is derived would be number of equivalents of acid.

The hydrocarbon solvent is used in an amount sufficient to keep the reaction mixture fluid during carbonation and may be aliphatic such as hexane or heptane or aromatic such as benzene, toluene or xylene, toluene being the preferred solvent. We find that 5 parts by weight of hydrocarbon solvent per part of alkaline earth metal compound is particularly suitable.

We have found that if the $C_8$ to $C_{12}$ carboxylic acid is omitted from our reaction mixture virtually none of the excess magnesium is converted to colloidal magnesium carbonate leading to the high sediment, poor filterability and low TBN. We find that by selecting $C_8$ to $C_{12}$ carboxylic acids the product of the cabonation reaction may be filtered more rapidly than with other carboxylic acids which has economic advantages. Although octanoic and dodecanoic acids may be used our more preferred acid is decanoic acid which may be n-decanoic or neo-decanoic acid. The amount of the carboxylic acid that should be used depends upon the nature of the magnesium compound, its quality and the TBN required. We prefer to use from 0.02 to 1.5 parts by weight based on the total amount of magnesium compound present.

The amount of water that should be added will depend upon the amount of excess magnesium compound present. Where magnesium oxide is used we prefer to use from 0 to 2 more preferably 0.5 to 2 parts by weight of water based on the total amount of magnesium oxide.

Whilst we have found that basic magnesium sulphonates may be obtained by carbonating the five component mixture described above, we have found that higher base numbers products with improved oil solubility, and lower viscosities may be obtained if other components or combinations of components are included in the reaction mixture.

We have found that the presence of an oxygen containing organic compound in the reaction mixture improves both the product and the reaction enhancing the formation of the basic colloidal compound. Examples of suitable oxygen containing compounds include alcohols, mono-ketones and aldehydes where an alcohol is used it should preferably contain less than 4 carbon atoms, preferably less than 3 carbon atoms the preferred alcohols being ethanol and methanol being the most preferred. Alternatively $C_3$ to $C_6$ ketones such as acetone or methyl ethyl ketone, preferably acetone may be used according to our copending application No. 48281/78. When the magnesium compound is magnesium oxide we prefer to use from 0 to 4 preferably 0 to 2 parts more preferably 0.5 to 2 by weight of the oxygen containing organic compound based on the total weight of the magnesium oxide.

We have also found that the $C_8$ to $C_{12}$, preferably $C_{10}$ carboxylic acid may be used together with other promoters previously proposed for the production of basic magnesium sulphonates. For example, it may be used together with the amines such as ethylene diamine of U.K. Patent 1166744 or with the diketones as are described in our copending application No. 48322/78 . Equally the diketone may be used together with halide containing promoters such as ammonium or magnesium chloride.

The addition of an oil soluble alkyl phenol to the reaction mixture is also useful in that it can give rise to products of improved viscosity. The alkyl phenols may be simple phenols, such as nonyl phenol, decyl and dodecyl phenol bridged phenols of the general formula:

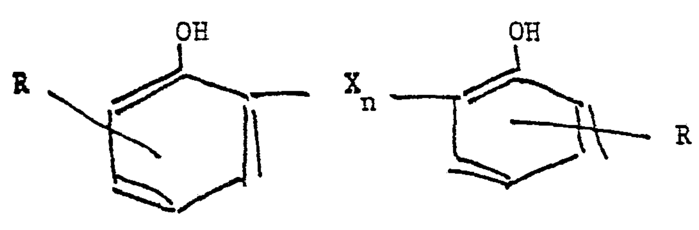

where R is an alkyl group containing at least 8 carbon atoms, X is sulphur or $(CH_2)$ and n is 1 or 2. The amount of the phenol that should be incorporated depends upon the nature of the other ingredients, but in our preferred process for the production of basic magnesium sulphonates from magnesium oxide, we prefer to use from 0 to 1 parts by weight based on the total weight of magnesium oxide present in the reaction mixture.

It should be appreciated that within the ranges of amounts specified above the preferred amounts of materials to be used will depend upon the relative proportions of all the various components in the reaction mixture.

The carbonate content of the final product can be controlled by stopping carbonation of the reaction mixture at any particular moment alternatively carbonation may be continued until there is no further significant uptake of carbon dioxide. The temperature of carbonation is not critical. The minimum temperature that may be used is that at which the reaction mixture remains fluid and the maximum is the decomposition temperature of the component with the lowest decomposition temperature. We prefer to carry out the carbonation at the reflux temperature which depends upon the components of the reaction mixture and the pressure. Generally carbonation is effected at a temperature in the range $25^{\circ}$ - $200^{\circ}C$ preferably 50 - $150^{\circ}C$. The use of the $C_8$ to $C_{12}$ carboxylic acid as reaction promoter is equally applicable to processes involving more than one carbonation stage and in which various components of the reaction mixture are added or removed between carbonation stages. We have found that staged additional of magnesium oxide and water where used can lead to further increase in the basicity of the product.

After carbonation the product is stripped to remove the volatile materials such as alcohol, water, and solvent and the remaining solids in the reaction mixture are removed preferably by filtration or centrifugation. The product may be stripped first and then filtered or vice versa. Further carbon dioxide may be passed through the reaction mixture during stripping. The final product is thus obtained as an oil solution of the basic magnesium sulphonate.

The basic magnesium sulphonates obtained from the process of the present invention are useful as additives for lubricants where their basicity neutralises acids formed by the operation of the engine and the surfactant part of the compound helps disperse unwanted residues in the oil to reduce the formation of harmful deposits. The basic magnesium sulphonate also enhances the antirust properties of the lubricant. The amount of the sulphonate that should be included in the oil depends upon the type of oil concerned and its application. For crankcase oils, we prefer to use from 0.01% to 5 wt.% based on the weight of the oil.

The basic magnesium sulphonates of this invention may be used in a wide variety of lubricating oils. The oils may be natural or synthetic or mixtures thereof and the main uses are in crankcase lubricants, two cycle and aviation lubricants.

The sulphonates may be used in combination with other conventional additives for lubricating oils such as for example other highly basic metal additives particularly other alkaline earth metal sulphonates and alkaline earth metal phenates and sulphurised phenates. In addition the oils may contain ashless dispersants such as the products obtained by the reaction of polyamines or polyols with polyisobutylene succinic anhydride and anti-oxidants, antiwear agents and anti corrosion additives such as the well known zinc dialkyldithiophosphates. The oils may also contain viscosity index modifiers such as the well known olefine copoymers.

The present invention is illustrated but in no way limited by reference to the examples in which a reaction mixture of 81.6 grams of a 90% active ingredient solution of a $C_{24}$ alkyl benzene sulphonic acid, diluent oil, carboxylic acid, 51.1 grams of magnesium oxide, 256 grams of toluene, 35 grams of methanol was prepared at room temperature in a 1 litre flask fitted with a reflux condenser the temperature of the mixture was raised to $60^{o}$ for 30 minutes, in all instances the combined weight of diluent oil and carboxylic acid was 124.3 grams. Carbon dioxide was introduced into the reaction mixture and the temperature of the mixture allowed to rise to the reflux temperature

where carbonation was continued for 2 hours with the carbon dioxide being introduced at 483 cc's/minute. After the desired amount of carbon dioxide had been introduced carbonation was stopped and the temperature of the mixture raised to 150° and vacuum stripped to remove the volatile materials after which the mixture was filtered at 150° using Special Speed-Flow filter aid to yield an oil solution of the required basic magnesium sulphonate.

In all instances the combined weight of diluent oil and carboxylic acid was 124.3 grams.

Various preparations were carried out using different carboxylic acids and the TBN's, magnesium oxide utilisations and rates of filtration of the preparations were as follows:

| Acid | TBN Mg KOH/g | MgO Utilisation % | Filtration Rate US gallons/ft$^2$/hour |
|---|---|---|---|
| Formic | 48 | 11.1 | |
| Acetic | | | Colloid Dump Out |
| n-Butryic | | | Gelled |
| n-Hexanoic | | | Gelled |
| n-Octanoic | 372 | 85.9 | 1.6 |
| n-Decanoic | 403 | 93.3 | 2.7 |
| neo-Decanoic | 402 | 92.8 | 2.0 |
| Lauric | 401 | 92.6 | 1.3 |
| Oleic | 391 | 90.3 | 1.4 |
| Stearic | 373 | 86.1 | 1.2 |
| Tall oil Fatty Acids | 348 | 80.4 | 4.0 |

WHAT WE CLAIM IS:

1. A process for the production of basic magnesium sulphonates comprising carbonating a mixture containing:

   (a) an oil soluble sulphonic acid or sulphonate
   (b) a stoicheiometric excess of a magnesium compound above that required to react with (a)
   (c) a hydrocarbon solvent
   (d) a $C_8$ to $C_{10}$ carboxylic acid
   (e) water

2. A process according to any of the preceding claims in which a $C_1$ to $C_5$ alcohol is also present in the mixture.

3. A process according to claim 2 in which the alcohol is methanol.

4. A process according to any of the preceding claims in which the magnesium compound is magnesium oxide.

5. A process according to any of the preceding claims in which from 0.5 to 2 parts by weight of water based on the total amount of magnesium oxide are used.

6. A process according to any of claims 2 to 5 in which from 0.5 to 4 parts by weight of the alcohol based on the total weight of magnesium oxide are used.

7. A process according to any of the preceding claims in which from 0.02 to 1 part by weight of the carboxylic acid based onthe total amount of the magnesium compound present is used.

8. A process according to any of the preceding claims in which the carboxylic acid is decanoic acid.

9. A process according to claim 1 substantially as hereinbefore described with particular reference to the accompanying Examples.

10. Basic magnesium sulphonates whenever produced by a process according to any of the preceding claims.

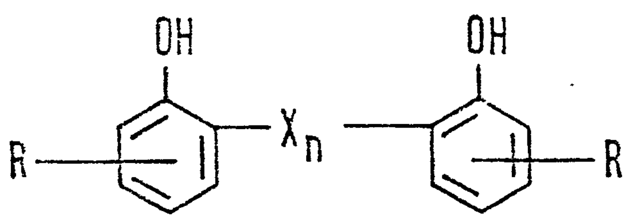

0014801

European Patent Office

# EUROPEAN SEARCH REPORT

Application number

EP 79 30 2825

| Category | Citation of document with indication, where appropriate, of relevant passages | Relevant to claim | CLASSIFICATION OF THE APPLICATION (Int. Cl.) |
|---|---|---|---|
| | US - A - 4 129 589 (THEO I. ELIADES) * Column 10, line 58 - column 11, line 23, lines 52-60 * | 1-10 | C 07 C 143/28<br>139/00<br>C 10 M 1/40 |
| D | GB - A - 1 297 150 (THE LUBRIZOL CORP.) * Page 17, lines 95-121; page 3, lines 116-125 * | 1-10 | |
| | GB - A - 964 729 (MONSANTO) * Page 5, lines 18-26; page 3, lines 30-37, line 54 * | 1-10 | TECHNICAL FIELDS SEARCHED (Int. Cl.)<br>C 10 M 1/40<br>C 07 C 139/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 28-04-1980 | SUTER |

EPO Form 1503.1 06.78

BAD ORIGINAL